# EUROPEAN PATENT APPLICATION

(11) **EP 2 327 980 A1**
(43) Date of publication of application: **01.06.2011**
(21) Application number: 10190606.3
(22) Date of filing: 10.11.2010
(51) Int. Cl.: G01N 27/407

(54) **Palladium ink exhaust sensor**

(30) Priority: 20.11.2009 US 623095
(71) Applicant: Delphi Technologies, Inc., Troy, MI 48007 (US)
(72) Inventor: Nottingham, Marsha E., Howell, MI 48855 (US); Gamboa, Oscar, 35010 Gomez (MX); Clyde, Eric P., Metamora, MI 48455 (US); Johnson, Jennifer S., Grand Blanc, MI 48439 (US)
(74) Representative: Denton, Michael John

(57) **Abstract**

An exhaust sensor includes a first sheet of ceramic that is perforated with a vent orifice and, a second sheet of ceramic that is laminated to the first sheet. A palladium circuit trace is positioned between the first sheet and the second sheet of ceramic and a fugitive ink is printed on one of the sheets that is in communication with the vent orifice and the palladium. The fugitive ink volatilizes during a firing process and created a void space that is occupied by a palladium oxide that forms at temperatures around 625-900C.

## Description

### TECHNICAL FIELD

The present disclosure relates to eliminating structural stress due to palladium oxide within a ceramic laminate structure.

### BACKGROUND OF THE INVENTION

Planar exhaust sensor elements are manufactured using multiple layers of alumina, porous, and zirconia tapes. Metallic features are printed on the various layers using platinum conductive ink. The multiple layers of printed tapes are laminated together, and this laminated composite is fired at high temperatures to yield a fully dense multi-layer ceramic element. The metalized features can be designed either on the surface of, or embedded within, the element. For embedded features, small holes through the tape called "vias" are filled with the conductive ink in order to carry the electrical circuit through the layers of insulating tape. All of the metalized features, both surface and embedded, typically come together in a pad of metal at the surface where an electrical connection to the outside circuit is made by way of soldering, brazing, pressure contacts, etc. This pad is known as the contact pad.

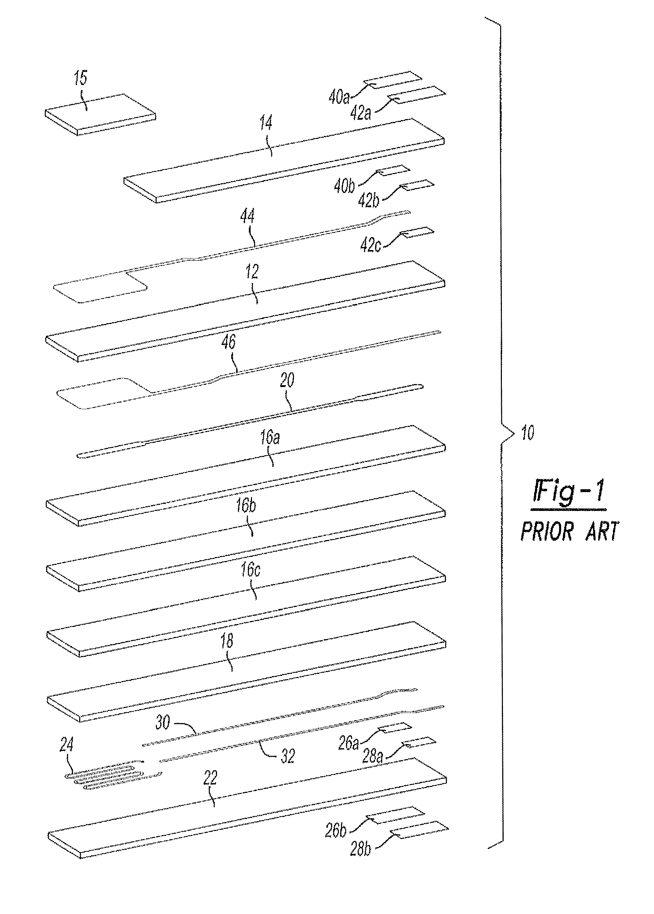

Referring now to FIG. 1, an exploded view is shown of an exhaust sensor 10 in accordance with the prior art just described Exhaust sensor 10 may implement a temperature sensor, a heater, a lambda sensor, an oxygen sensor, or the like. Exhaust sensor 10 is formed from layers of green ceramics and metal inks that are layered and then fired together to form a unitary laminar structure.

A sensor layer 12 may be formed from zirconia. Sensor layer 12 may be sandwiched between a sensor protective layer 14 and a stack of support/insulating layers 16a-16c, which are collectively referred to as support/insulating layers 16. Sensor protective layer 14 and support/insulating layers 16 can be formed from alumina. A sacrificial material 20, such as carbon ink, can be applied to support/insulating layers 16 at the interface with sensor layer 12. Sacrificial material 20 volatilizes during firing and leaves a void air reference channel that is in communication with one side of sensor layer 12. A porous protection layer 15 allows exhaust gas to reach one side of sensor layer 12 while protecting sensor layer 12 from moisture and/or particulates.

Exhaust sensor 10 also includes a heater that heats sensor layer 12. A separator layer 18 may be formed from alumina and positioned between support/insulating layers 16 and a heater protective layer 22. The heater is positioned between separator layer 18 and heater protective layer 22. The heater is formed from a platinum heater serpentine 24. Platinum may also be employed to form pairs of pads 26a-26b and 28a-28b. Pads 26a-26b and 28a-28b provide a power connection to heater serpentine 24 via associated heater leads 30 and 32.

Platinum may also be employed to form pads 40a-40b and vias 42a-42c, which provide a connection to a signal voltage that is developed across sensor layer 12. Pads 40a-40b and 42a-42c communicate with electrode lead 44 and electrode lead 46, respectively. Electrode leads 44 and 46 are also formed of platinum.

The electrical features of exhaust sensor 10, such as heater serpentine 24, heater leads 30 and 32, pads 26, 28, electrode leads 44 and 46, and pads 40 and 42, are formed of platinum conductive ink. The zirconia, alumina, and porous layers are initially green, e.g. unfired, ceramic tapes. The electrical features are printed on the various layers. The multiple layers of tapes, at least some of which are printed, are then laminated together and fired at high temperatures to yield a fully dense multi-layer ceramic element. The metallized features, e.g. heater serpentine 24, electrode leads 44 and 46, and the various pads, can be designed either on the surface of, or embedded within, exhaust sensor 10. For embedded metallized features, vias are punched through the green ceramic. The vias are filled with the conductive ink and fired to make electrical connections with a circuit. Exhaust sensor 10 also includes contact pads that are formed on an exterior of exhaust sensor 10. The contact pads provide an external connection to the metallized features regardless of whether they are internal or external of exhaust sensor 10.

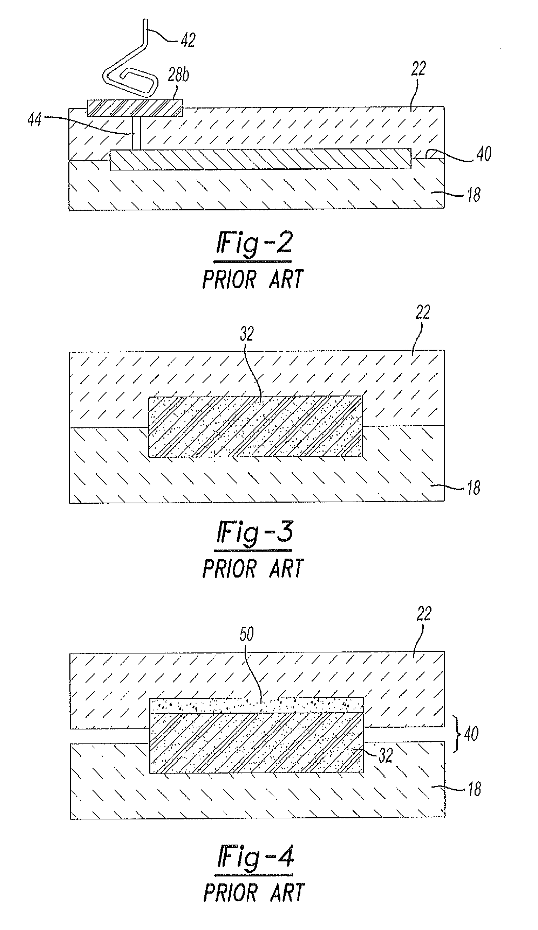

Referring now to FIGS 2 and 3, cross sections are shown of a portion of exhaust sensor 10. Heater lead 32 is laminated between separator layer 18 and heater protective layer 22. A lamination region 40 indicates where separator layer 18 and heater protective layer 22 are laminated together. Pad 28b provides an attachment point for an electrical lead 42. Electrical lead 42 can be resistance welded, brazed, soldered, or otherwise attached to via 28. A via 44 includes a plated or inked conductor 44 that electrically connects pad 28b and heater lead 32. FIG 3 omits pad 28b and via 44 for the sake of clarity.

As shown in FIG 4, there are some drawbacks to this design. Firing the green laminated ceramics releases gases from organic binders. These gases expand and can cause defects such as the delamination of region 40 or bubble formation in the ceramic material. Both are causes of scrap and in-service failures. These problems can be minimized by adding a venting feature, e.g. one or more open vias 44, to allow the gasses to escape without causing cracks and/or bubbles during firing.

However, the venting feature introduces another failure mode in service. The open venting feature can permit contaminants, such as dissolved ionic compounds in water, to enter the element under some service conditions. This weakens the ceramic materials and may cause spalling, cracking, and other failures.

Another drawback is the high cost of the platinum metallization. Platinum is one of the few metals that have a melting/vaporization point high enough to withstand the firing temperature of the ceramic materials. It also has catalytic properties that are well suited to sensor functions. For metal features not related to those sensor functions, however, efforts have been made to replace platinum with palladium, palladium alloy, or related metals and alloys thereof, all of which are collectively referred to herein as "palladium."

Palladium is less expensive than platinum and will stand up to the temperatures needed to co-fire the ceramic materials reasonably well. Unlike platinum, however, palladium forms an oxide. Palladium oxide reversibly forms at approximately the same temperature where oxygen sensors operate, beginning at around 625 deg C and decomposing around 850-900 deg C. There is a considerable volume increase, such as around 38%, associated with the formation of the related metal oxidation.

The volume difference between oxidized and unoxidized palladium causes some risk when palladium is used for embedded metallized features. During firing and potentially during service, the oxygen sensor will cycle through temperatures that will cause formation and decomposition of the oxide. This oxidation/decomposition process occurs during the firing process and may also occur during operation in service if the element is not hermetically sealed. The volume change on oxidation is likely to cause cracking and/or delamination.

### SUMMARY OF THE INVENTION

The invention is related to an exhaust sensor, comprising a first sheet of ceramic that includes an orifice vent opening and a second sheet of ceramic that is laminated to the first sheet and a palladium circuit trace that is positioned between the first sheet and the second sheet of ceramic. In the sensor, a fugitive ink further occupies at least a portion of the orifice vent opening. The fugitive ink may be carbon ink. The first and second sheets of ceramic are comprised of alumina.The palladium is palladium ink. The exhaust sensor may further comprise an electrically conductive via that is formed in the orifice vent opening, a conductive pad being formed over the orifice vent opening.

The invention is also realated to a method of making such an exhaust sensor. The method comprises the steps of perforating an orifice vent opening through a first ceramic sheet; printing a palladium circuit trace on a second ceramic sheet; printing a fugitive ink to register with the palladium circuit trace; laminating the first ceramic sheet with the second ceramic sheet such that the palladium circuit trace and fugitive ink are sandwiched between the first ceramic sheet and the second ceramic sheet and registered with the orifice vent opening; and volatilizing the fugitive ink such that it leaves a void space between the first and second sheets allowing palladium oxide to form.

The method may further comprise printing the fugitive ink into the orifice vent opening, the fugitive ink being carbon ink.Also, the first and second ceramic sheets may comprise alumina and the palladium may be palladium ink. Further method step may be forming an electronically conductive via in the orifice vent opening and sealing the venting feature with a conductive pad in contact with the conductive via.

The invention is also related to an exhaust sensor, comprising a first sheet of ceramic that is perforated with a plurality of vent orifices, a second sheet of ceramic that is laminated to the first sheet and a palladium circuit traces that are positioned between the first sheet and the second sheet of ceramic, a fugitive ink in communication with the vent orifices and the palladium circuit traces; and a palladium oxide disposed within a void space created by the fugitive ink volatilizing after a firing process. The fugitive ink may be carbon ink.The first and second sheets of ceramic may comprise alumina and the palladium circuit traces may comprises an electric heater element and at least one lead connected thereto where at least one conductive pad that seals at least one of the plurality of vent orifices and that is electrically connected to said at least one lead.

### BRIEF DESCRIPTION OF THE DRAWINGS

The present disclosure will become more fully understood from the detailed description and the accompanying drawings, wherein:

FIG 1 is an exploded view of an exhaust sensor in accordance with the prior art;

FIGS 2-4 are cross- sections of different details of exhaust sensors in accordance with the prior art;

FIG 5 is an exploded view of an exhaust sensor in accordance with the present invention;

FIG 6 is a cross section showing a detail of the present invention before firing;

FIG 7 is a cross section showing the detail of FIG 6 after firing;

FIG 8 is a cross section showing another detail of the present invention before firing;

FIG 9 is a cross section showing the detail of FIG 8 after firing;

FIG 10 is a cross section of yet another detail of the present invention;

FIG 11 is a flow diagram of a process that forms the present invention; and

FIG 12 is a flow diagram of another process that forms the present invention.

### DESCRIPTION OF THE PREFERRED EMBODIMENTS

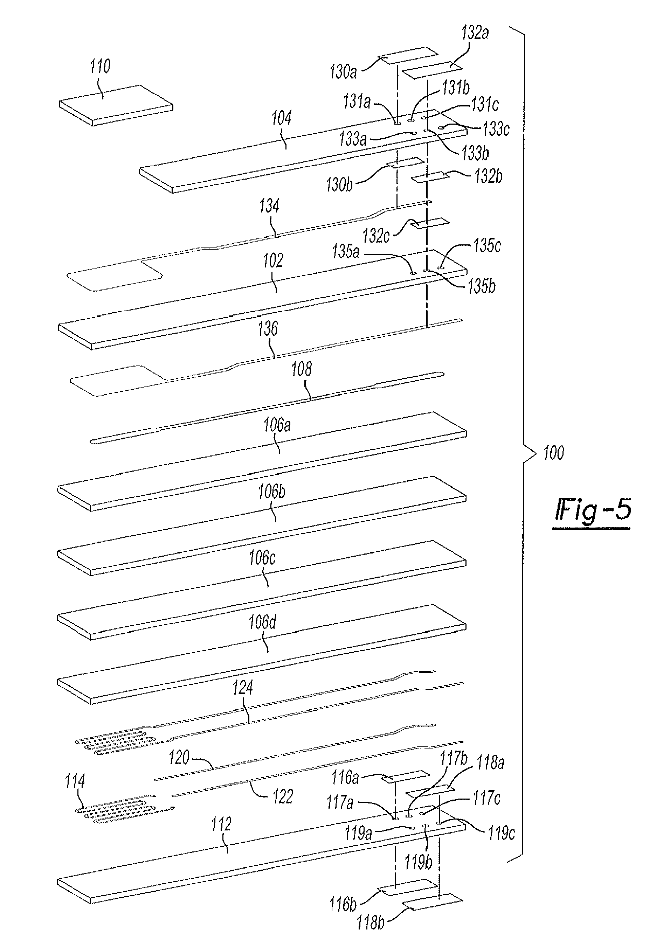

Referring now to FIGS 5 through 12, where the invention will be described with reference to specific embodiments, without limiting same, FIG 5 is an exploded view of an exhaust sensor 100. In some aspects exhaust sensor 100 is similar to exhaust sensor 10 of the prior art, however exhaust sensor 100 employs an expansion zone and venting feature as will be further described herein. The expansion zone and venting feature enable palladium to be employed instead of platinum for forming circuit features such as heaters, circuit traces and pads, sense elements, and the like.

Exhaust sensor 100 is formed from layers of ceramics and metal inks that are fired together to form a unitary laminar structure. A sensor layer 102, such as zirconia, can be sandwiched between a sensor protective layer 104 and a structure of one or more support/insulating layers 106a-106d, which are collectively referred to as support/insulating layer 106. Sensor protective layer 104 and support/insulating layers 106 can be formed from alumina or the like. A sacrificial ("fugitive") material 108, such as carbon ink, is applied to support/insulating layers 106 at the interface with sensor layer 102. Sacrificial material 108 volatilizes during firing and leaves a void air reference channel that is in communication with one side of sensor layer 102. A porous protection layer or diffusion restriction layer 110, applied to sensor layer 102, allows exhaust gas to reach one side of sensor layer 102 while protecting sensor layer 102 from moisture and/or contamination with particulates.

Exhaust sensor 100 also includes a heater 114 that heats sensor layer 102. The heater 114 is positioned between support/insulating layers 106 and a heater protective layer 112. The heater 114 is formed from palladium, and as shown, is serpentine in shape. Palladium is also employed to form pairs of pads 116a and 116b and associated conductive vias 117a, 117b and 117c. In a like manner, palladium is employed to form corresponding pairs of pads 118a and 118b associated conductive vias 119a, 119b and 119c. Pads 116a and 118a provide a power connection to heater 114 through a heater lead 120 and 122, respectively. Heater leads 120 and 122 are also formed with palladium.

A fugitive ink 124 is printed over heater 114 and heater leads 120 and 122. Fugitive ink 124 may be organic in nature and may use carbon latex spheres, flour, carbon black powder, or other materials that volatilize during firing and therefore leave a void in the ceramic lamination. The volatilized ink escapes through one or more venting features that are described below. The resulting void provides space for palladium oxide to form without stressing the adjoining layers of exhaust sensor 100. It will be appreciated that while fugitive ink 124 is shown as a trace for palladium heater 114 and heater leads120 and 122, its use is not limited to those applications. Fugitive ink 124 may be employed between any of the layers in exhaust sensor 100 to provide space for palladium oxide to form without generating pressure that could separate adjacent laminated layers.

Pads 130a-130b and 132a-132b are disposed on opposite sides of protective layer 104, while pads 132b and 132c are adjacent. As shown in FIG 5, pads 130a-130b and 132a-132b are interconnected with vias 131a, 131b and 131c and vias 133a, 133b and 133c, respectively. Pad 132c is connected to vias 135a, 135b and 135c on sensor layer 102. Pads 132a-132c, in combination with vias 133a-133c and vias 135a-135c communicate with a lead 136. In a like manner, pads 130a and 130b, in combination with 131a-131c, communicates with a lead 134. The construction described and shown provides a connection to a signal voltage that develops across sensor layer 102.

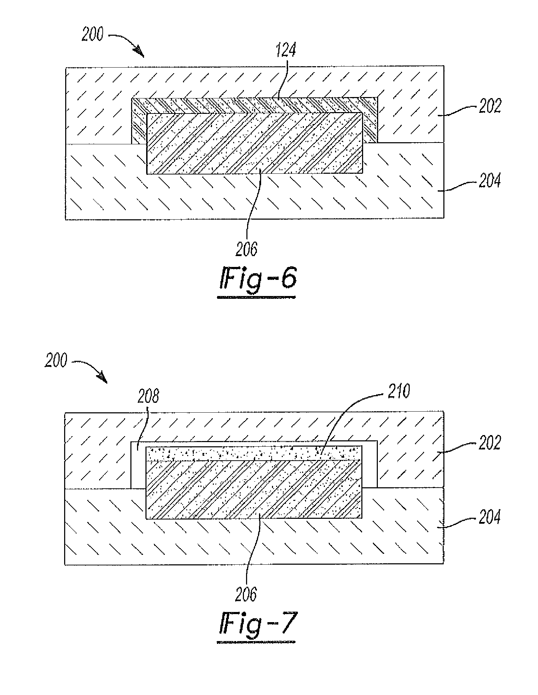

Referring now to FIG 6, a cross-section is shown of a portion of an exhaust sensor 200. FIG 6 shows exhaust sensor 200 in a green or unfired state. Exhaust sensor 200 includes a palladium circuit trace 206. Palladium circuit trace 206 is formed or printed with palladium ink. A first ceramic tape layer 202 is laminated to a second ceramic tape layer 204. The first ceramic layer 202 and second ceramic layer 204 is formed from alumina. It will be appreciated that other suitable materials known to one in the art may be substituted. Palladium circuit trace 206 is positioned on ceramic tape layer 204 and will ultimately be between first ceramic layer 202 and second ceramic layer 204. Fugitive ink 124 is printed over palladium circuit trace 206 prior to ceramic tape layers 202 and 204 being laminated together. Fugitive ink 124 therefore occupies space between palladium circuit trace 206 and first ceramic layer 202 when ceramic layers 202 and 204 are fired.

Referring now to FIG 7, a cross section is shown of the exhaust sensor 200 of FIG 6 after firing. Fugitive ink 124 has volatilized, leaving a void or expansion space 208. Expansion space 208 provides room for palladium circuit trace 206 to form palladium oxidation 210 without cracking or delaminating first ceramic layer 202 and second ceramic layer 204.

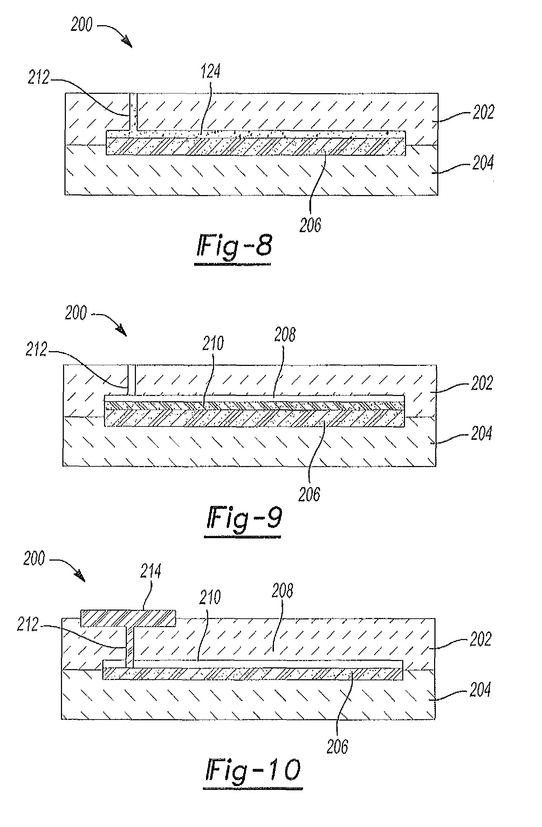

Referring now to FIG 8, a second embodiment is shown of exhaust sensor 200 in which an orifice venting feature 212 has been added. Orifice venting feature 212 vents the gasses generated by fugitive ink 124 when exhaust sensor 200 is volatilized during firing. Venting feature 212 can simply be the open orifice prior to firing, or venting feature 212 can contain fugitive ink 124, as shown in FIG 8, to assure that orifice venting feature 212 stays open during lamination. Referring now to FIG 9, a cross section is shown of the exhaust sensor 200 of FIG 8, after firing. Fugitive ink 124 has volatilized and escaped through venting feature 212, leaving behind expansion space 208 and palladium oxidation 210.

The embodiment shown in FIG 10 is a cross section of the exhaust sensor 200 first seen in FIG 6, with the addition of a contact pad 214. Contact pad 214 is printed after exhaust sensor 200 is fired by filling orifice venting feature 212 with palladium ink and forming contact pad 214 on the exterior surface of ceramic tape layer 202. The resulting sensor 200 has contact orifice pad 214 providing an electrical contact through venting feature 212 to palladium circuit trace 206. Contact pad 214 and the palladium in orifice 212 also seals orifice venting feature 212 to prevent moisture, debris, and the like from entering expansion space 208.

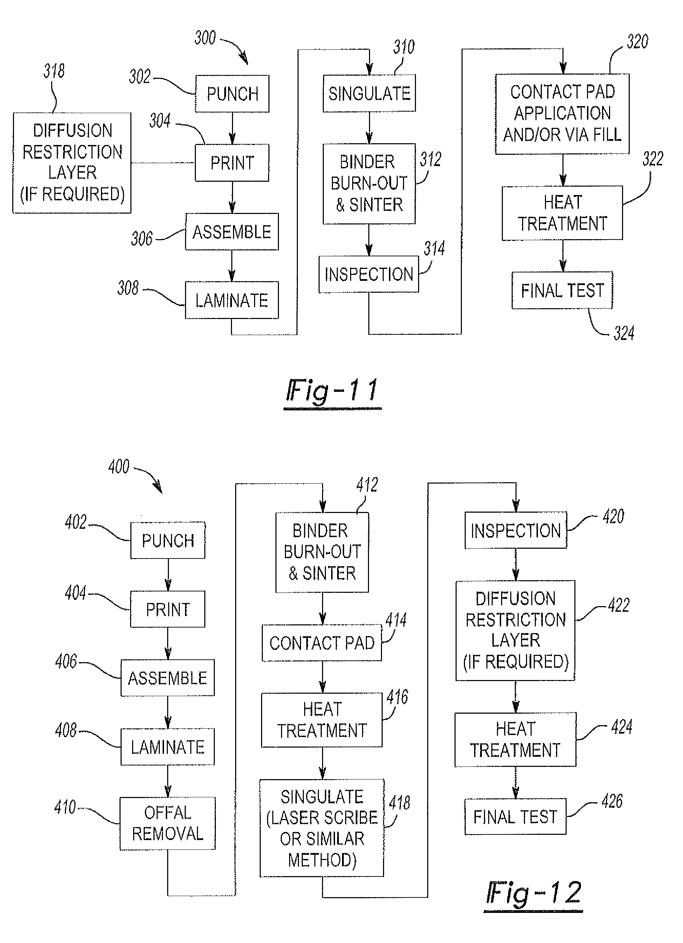

The process flow diagram of FIG 11 depicts a first method 300 of manufacturing the exhaust sensor 200. Method 300 begins by forming venting features 212 with a punching process 302 through a first sheet of green ceramic that will ultimately be singulated. The punched sheet of green ceramic after singulation, will become a plurality of first layers 202 of a plurality of exhaust sensors 200.

As shown at step 304, a palladium circuit trace 206 is printed on a second sheet of green ceramic, such as second layer 204. The fugitive ink 124 is also printed over circuit trace 206 in step 304. The method then proceeds to step 306, where assembly occurs by registering the venting features 212 of the first sheet with its associated palladium circuit traces 206 on the second sheet and the fugitive ink 124 on the second sheet. Thereafter, first and second sheets are laminated together in step 308. The lamination step 308 can be performed with heat and pressure. The laminated sheets form first layer 202 and second layer 204, which are best shown in FIG 6.

Individual exhaust sensors 200 are formed in step 310 by cutting or singulating the first and second sheets of laminated first layer 202 and second layer 204. This results in a plurality of individual exhaust sensor 200 that still require further processing. As identified at block 312 laminated layers 202 and 204 are then fired. Firing bums out a laminating binder and sinters the ceramic layers. An inspection step, as identified at block 314 inspects exhaust sensor 200 for defects such as plugged venting features 212, delaminated first layer 202 and second layer 204, and the like. The porous protection layer or diffusion restriction layer 110, identified as step 318, is added during the printing steps 304, if desired. Porous protection layer 110 is primarily employed when exhaust sensor 200 implements an oxygen sensor.

Contact pads 214 are applied and the filling of orifice venting features 212 are carried out in step 320.A heat treating step shown as step 322, secures contact pads 214 into orifice venting features 212 and provides a secure connection to palladium circuit trace 206. The method of manufacture of exhaust sensor 200 finishes at block 324 where the finished exhaust sensors 200 is tested to verify that each one is operative.

The process of FIG 12 depicts a second method 400 of manufacturing exhaust sensor 200. Second method 400 differs from method 300 in that method 400 singulates the sensors after they are fired instead of before they are fired. Depending on available equipment, this may allow second method 400 to be more efficient by printing contact pads 214, vias, or orifice venting features 212 while a plurality of exhaust sensors 200 are still together in a single laminate. Exhaust sensors 200 are then singulated after being fired.

Method 400 begins at block 402 by punching orifice venting features 212 through a sheet of green ceramic. The sheet of green ceramic will, upon singulation, provide a plurality of first layers 202 for a plurality of sensors 200. At step 404 the palladium circuit trace 206 and fugitive ink are printed on a second sheet of green ceramic. As with the first sheet, the second sheet will become, upon singulation, a plurality of second layers 204. As identified in block 406, first and second green ceramic sheets are aligned so that orifice venting features 212 are registered with associated palladium circuit traces 206. The aligned green sheets may also be hot pinned to maintain the registration. Thereafter, as shown in block 408, the green layers are laminated together; thereby forming a plurality of first layer 202 and second layer 204 in a single lamination.

Unlike the method 300 described in relation to FIG 11, method 400 then proceeds to, if necessary, removing offal from the laminated first and second layers 212, as shown in step 410. The entirety of laminated first and second layers 202, 204, still in a single lamination are then fired, as seen in step 412. The firing bums out any binder that was employed and sinters the ceramic sheets. Method 400 then proceeds to block 414 and prints contact pads 214 and orifice venting features 212, also shown in FIG 5 as 117a-117c, 119a-119c vias 131a-131c, 133a-133c and 135a-135c. Method 400 then proceeds to block 416, where heat treating of contact pads 214 fixes them on the exterior surface of the laminate, thereby sealing venting features 212. Unlike method 300, singulation of the fired laminate into individual exhaust sensors 200 occurs after heat treating, as shown in step 418. Inspection of exhaust sensors 200 for defects such as cracking, lamination separation, and the like occurs as step 420. The porous protection layer or diffusion restriction layer 110 is applied to exhaust sensors 200, if needed at step 422. Porous protection layer 110 is primarily employed when exhaust sensor 200 implements an oxygen sensor. Method 400 then proceeds to block 424 and heat treating again is performed, this time on the completed exhaust sensors 200 prior to final testing in step 426.

## Claims

1. An exhaust sensor (100), comprising:
a first sheet of ceramic (104) that includes at least one orifice vent opening;
a second sheet of ceramic (106) that is laminated to the first sheet (104);
**characterized in that** the sensor further comprises
a palladium circuit trace (102) that is positioned between the first sheet and the second sheet of ceramic

2. The exhaust sensor (100) of claim 1, wherein a fugitive ink (108) further occupies at least a portion of the orifice vent opening.

3. The exhaust sensor (100) of claim 2, wherein the fugitive ink (108) is carbon ink.

4. The exhaust sensor (100) as set in any of the preceding claim, wherein the first and second sheets (104, 106) of ceramic are comprised of alumina.

5. The exhaust sensor (100) as set in any of the preceding claim, wherein the palladium is palladium ink.

6. The exhaust sensor (100) as set in any of the preceding claim, further comprising an electrically conductive via (117a, 117b, 117c) that is formed in the orifice vent opening.

7. The exhaust sensor (100) of claim 5, further comprising a conductive pad (118a, 118b) formed over the orifice vent opening.

8. A method of making an exhaust sensor (100) as set in any of the preceding claim, the method comprising the steps of:
perforating an orifice vent opening through a first ceramic (104) sheet;
printing a palladium circuit trace on a second ceramic sheet (106);
printing a fugitive ink (108) to register with the palladium circuit trace;
laminating the first ceramic sheet (104) with the second ceramic sheet (106) such that the palladium circuit trace and fugitive ink (108) are sandwiched between the first (104) ceramic sheet and the second ceramic (106) sheet and registered with the orifice vent opening; and
volatilizing the fugitive ink (108) such that it leaves a void space between the first and second sheets allowing palladium oxide to form.
forming palladium oxide in the void space.

9. The method of claim 8, further comprising sealing the venting feature.
